# FASCICULE DE BREVET EUROPEEN

(11) **EP 3 426 091 B1**
(45) Date de publication et mention de la délivrance du brevet: **03.05.2023**
(21) Numéro de dépôt: 17715215.4
(22) Date de dépôt: 07.03.2017
(51) Int. Cl.: A46B 9/02

(54) **APPLICATEUR DE PRODUIT COSMETIQUE**
APPLIKATOR FÜR EIN KOSMETIKUM
COSMETIC PRODUCT APPLICATOR

(30) Priorité: 11.03.2016 FR 1652039
(43) Date de publication de la demande: 16.01.2019
(73) Titulaire: Chanel Parfums Beauté, 92200 Neuilly-sur-Seine (FR)
(72) Inventeur: CASTEX, Nicolas, 92700 Colombes (FR)
(74) Mandataire: Santarelli
(86) Numéro de dépôt international: PCT/FR2017/050500
(87) Numéro de publication internationale: WO 2017/153673

(56) Documents cités:
- WO-A1-2013/153528
- WO-A1-2015/124481
- WO-A2-2008/113939
- WO-A2-2010/007588
- FR-A1- 2 744 608
- US-A- 4 422 986
- US-A1- 2009 056 737
- US-A1- 2013 000 663

## Description

L'invention concerne les applicateurs de produit cosmétique.

Un article de mascara, ou « mascara », comprend classiquement un étui, un réservoir de mascara et un applicateur. Il existe deux types d'applicateurs, ceux de type goupillon et ceux injectés. Un applicateur de type goupillon forme une brosse qui comprend des poils formés par des fibres emprisonnées dans un fil métallique torsadé formant l'âme de l'applicateur. Un applicateur injecté est d'une seule pièce et comporte des poils ou des dents en matière plastique. De tels applicateurs donnent des résultats satisfaisants pour l'utilisatrice. Mais cette dernière est toujours à la recherche de nouveaux ou de meilleurs effets de maquillage. Par exemple, l'utilisatrice recherche parfois un effet de maquillage « naturel » dans lequel la séparation des cils n'a pas un aspect trop régulier. De nombreux applicateurs sont proposés, notamment des applicateurs présentant des picots agencés en plusieurs colonnes le long d'un axe longitudinal de l'applicateur.

Des applicateurs de produits cosmétiques et des procédés pour les réaliser sont connus des documents US 4 422 986, WO 2015/124481, WO 2013/153528, US 2009/056737, FR 2 744 608, WO 2008/113939, WO 2010/007588, US 2013/000663.

Un but de l'invention est donc d'améliorer les applicateurs de produit cosmétique.

A cet effet, on prévoit selon l'invention un applicateur de produit cosmétique tel que défini dans la revendication 1. Des modes de réalisations sont définis dans les revendications dépendantes. Un applicateur selon l'invention présente une extrémité proximale et une extrémité libre et comprend au moins deux rangées de doigts formant respectivement des première et deuxième couches planes,
les deux couches étant distinctes et parallèles entre elles,
les doigts présentant une dimension qui diminue lorsqu'on parcourt l'applicateur depuis l'extrémité proximale jusqu'à l'extrémité libre.

La dimension du doigt qui diminue peut être sa plus grande dimension mais également une autre dimension. Par exemple, il peut s'agir de sa longueur, sa largeur et/ou son épaisseur.

Dans le cas où il s'agit de la longueur, un profil en forme de « fougère » est obtenu. Une telle disposition est notamment avantageuse en ce qu'elle facilite l'introduction de l'applicateur dans un réservoir de produit cosmétique. Dans le cas où il s'agit de l'épaisseur, cela permet notamment de séparer et de maquiller les cils différemment sur toute la longueur d'une rangée de cils. Dans les deux cas, des parties de l'applicateur de configurations différentes sont créées et peuvent être utilisée pour des gestes ou des résultats de maquillage différents.

En outre, cette diminution de la dimension des doigts permet de prévoir que l'extrémité libre soit particulièrement fine. Ainsi, cette extrémité peut être utilisée soit pour un dépôt précis de produit, par exemple en cas de retouche, soit pour une autre fonction de maquillage, par exemple en tant qu'eyeliner. Cela est particulièrement avantageux pour l'utilisatrice puisqu'elle n'a alors pas besoin d'acheter deux articles différents, par exemple un applicateur de mascara et un eyeliner.

Une rangée de doigts correspond à des doigts disposés de manière organisée linéairement.

Selon l'invention revendiquée, un angle entre une direction longitudinale de l'applicateur et chaque doigt diminue lorsqu'on parcourt l'applicateur depuis l'extrémité proximale jusqu'à l'extrémité libre.

Cette caractéristique contribue elle aussi à donner à l'applicateur une forme de fougère ou encore un profil effilé. Comme il a déjà été dit, cette caractéristique permet de faciliter l'introduction de l'applicateur dans le réservoir. On peut par exemple prévoir que l'angle entre la direction longitudinale de l'applicateur et le doigt le plus distal soit proche de 0°, voire égal à 0°. En outre, on peut également prévoir que l'angle entre la direction longitudinale de l'applicateur et le doigt le plus proximal soit sensiblement égal à 90°. De manière générale, on prévoit que l'angle entre un doigt quelconque de l'applicateur et la direction longitudinale de l'applicateur est compris entre 0° et 90°, de préférence compris entre 0° et 75°, par exemple compris entre 0° et 60°, voire compris entre 0° et 45°.

Les deux rangées sont en regard l'une de l'autre, de préférence ces deux rangées étant contiguës.

Ainsi, un espace est formé entre ces deux rangées et peut servir de réserve de produit. Cela limite le nombre de fois que l'utilisatrice est obligée de replonger l'applicateur dans le réservoir lors de l'utilisation. En outre, dans le cas où ces deux rangées sont contigües, cette réserve est localement compressée par les deux rangées lors de l'application du produit sur les cils. Ainsi, le produit sort de cette réserve uniquement dans la région sollicitée pour le maquillage, ce qui permet d'optimiser la réserve de produit et de diminuer encore le nombre de fois où l'utilisatrice doit replonger l'applicateur dans le réservoir.

De préférence, l'applicateur comprend en outre une troisième rangée de doigts s'étendant dans la première couche.

De préférence encore, l'applicateur comprend en outre une quatrième rangée de doigts s'étendant dans la deuxième couche, de préférence la quatrième rangée étant en regard de la troisième.

Les avantages de la disposition des troisième et quatrième rangées en regard l'une de l'autre sont les mêmes que ceux décrits précédemment pour les première et deuxième rangées. Les dispositions particulières des troisième et quatrième rangées par rapport aux première et deuxième rangées donnent à l'applicateur une forme générale aplatie qui est notamment avantageuse en ce qu'elle permet de limiter l'encombrement de l'applicateur et donc de réduire la taille de l'article dans lequel il est compris.

De manière avantageuse, au moins certains des doigts de deux des rangées s'étendant dans une même couche ont des directions respectives opposées.

Les doigts respectifs de deux des rangées en regard l'une de l'autre sont décalés les uns par rapport aux autres le long d'une direction longitudinale de l'applicateur, et de préférence sont disposés en quinconce.

Cette disposition particulière permet d'augmenter le nombre de cils qui seront maquillés et/ou peignés par l'applicateur et donc d'améliorer le résultat de maquillage. On peut prévoir que la valeur du décalage entre deux doigts consécutifs soit variable le long de l'applicateur. Ainsi, on obtient une disposition irrégulière des doigts le long de l'applicateur. Une telle répartition des doigts est particulièrement intéressante puisqu'elle permet d'obtenir un effet « ébouriffé » des cils qui donnent ainsi l'impression d'être plus denses et plus volumineux. La disposition en quinconce permet en outre de créer des réserves de produit entre les doigts, cette caractéristique étant avantageuse en ce qu'elle évite à l'utilisatrice de plonger l'applicateur dans le réservoir de manière trop répétée.

De préférence, dans au moins une des rangées, les doigts de la rangée diffèrent tous entre eux au moins par une direction, une dimension et/ou une forme.

Ainsi, il est possible d'obtenir des résultats et des effets de maquillage qui diffèrent en fonction de la portion de l'applicateur au contact des cils.

En outre, on peut de cette façon dans certains cas obtenir un applicateur à l'allure irrégulière. Cette caractéristique participe encore à un effet de maquillage irrégulier ou « ébouriffé » qui est recherché. On peut par exemple prévoir que les doigts sont tous différents entre eux par leur orientation, leur dimension et leur forme.

De plus, selon l'invention, les doigts étant des doigts principaux, l'applicateur comprend en outre des doigts secondaires s'étendant à partir d'au moins un des doigts principaux, de préférence des doigts secondaires s'étendant à partir de chaque doigt principal.

Ainsi, on améliore l'effet de peignage de l'applicateur. On peut par exemple prévoir qu'un doigt principal porte à sa surface entre deux et vingt doigts secondaires, de préférence entre deux et dix doigts secondaires, voire entre deux et six doigts secondaires.

De préférence, au moins un des doigts secondaires s'étend dans la même couche que le doigt principal à partir duquel il s'étend, de préférence tous les doigts secondaires d'un doigt principal s'étendant dans la même couche que le doigt principal.

Ainsi, on obtient un applicateur plus fin puisque les doigts principaux et secondaires s'étendent dans une même couche. L'applicateur présente donc un encombrement moindre et peut former un applicateur de plus petites dimensions, ce qui est particulièrement avantageux pour l'utilisatrice qui est très souvent amenée à transporter l'article, par exemple dans un sac à main. Il est même fréquent que l'utilisatrice garde avec elle plusieurs articles de ce type qu'elle utilise selon les circonstances.

Avantageusement, au moins un des doigts principaux présente une face supérieure et une face inférieure, et au moins un des doigts secondaires associées à ce doigt principal s'étend à partir de l'une et/ou l'autre de ces faces.

Ainsi, un ensemble constitué par un doigt principal et les doigts secondaires qui lui sont associées permet de maquiller les cils dans plusieurs directions différentes et participe ainsi au caractère irrégulier et au résultat ébouriffé du maquillage. En outre, ce caractère multidirectionnel des doigts permet d'attraper un cil quelle que soit sa position par rapport à la rangée de cils. On peut prévoir que les faces supérieure et inférieure d'un doigt principal portent le même nombre de doigts secondaires. Elles peuvent par exemple porter chacune entre 1 et 10 doigts secondaires, voire entre 1 et 5 doigts secondaires. On peut également prévoir que les faces supérieure et inférieure portent un nombre différent de doigts secondaires. Par exemple, la face supérieure peut présenter un doigt secondaire et la face inférieure en présenter deux ou inversement.

De manière avantageuse, au moins un des doigts principaux et/ou au moins un des doigts secondaires présente une section aplatie suivant une direction parallèle à une direction longitudinale de l'applicateur.

Cette section aplatie présente l'avantage de créer un « plateau » apte à être enduit de produit après que l'applicateur ait été plongé dans un réservoir de produit. Ainsi, le doigt comprend à sa surface une grande quantité de produit disponible pour le maquillage, ce qui réduit le nombre de fois où l'utilisatrice est obligée de replonger l'applicateur dans le réservoir. En outre, cette section aplatie, et donc fine, permet de séparer efficacement les cils les uns des autres, ce qui constitue un effet de maquillage recherché par l'utilisatrice.

De manière préférée, au moins un des doigts principaux et/ou au moins un des doigts secondaires a une forme générale aplatie, de préférence tous les doigts principaux et/ou tous les doigts secondaires ayant une forme générale aplatie.

Les avantages de cette caractéristique sont les mêmes que ceux cités précédemment, à savoir un encombrement réduit et une fonction de réserve et de séparation des cils améliorée.

Au moins un des doigts a une forme lancéolée.

Une forme lancéolée est une forme en fer de lance. Un doigt de cette forme présente une base fine qui s'élargie fortement sur une courte portion puis qui rétrécie progressivement jusqu'à son extrémité libre qui est fine et souple. Ainsi, la portion basale large peut servir de réserve de produit alors que l'extrémité fine libre peut servir à lisser le produit sur le cil ainsi qu'à séparer les cils entre eux de sorte à obtenir un meilleur résultat de maquillage. Cette extrémité fine libre facilite également l'introduction de l'applicateur dans un étui de l'article. Elle facilite aussi le maquillage des petits cils ou l'exécution de corrections lors du maquillage. On peut prévoir que tous les doigts principaux ont une forme lancéolée. On peut également prévoir que tous les doigts secondaires ont une forme lancéolée. D'autres formes de doigts peuvent être envisagées, par exemple falciforme, oblancéolée, subulée, aciculaire, acuminée, rhomboïdale ou encore en forme de goutte d'eau.

Avantageusement, au moins un des doigts présente des stries à sa surface, de préférence tous les doigts présentant des stries à leur surface.

Ces stries permettent d'augmenter les frottements à la surface des doigts et donc d'améliorer le chargement en produit de l'applicateur lorsque celui-ci est plongé dans la réserve. Les stries en effet augmentent la surface de contact de chaque doigt avec le produit et l'adhésion de ce dernier sur le doigt. Cela permet donc de réduire le nombre de fois que l'utilisatrice est obligée de replonger l'applicateur dans le réservoir. Ces stries peuvent avoir des dimensions et des orientations variables entre les différents doigts en fonction de la quantité de produit avec laquelle on souhaite que l'applicateur soit chargé.

De préférence, l'applicateur présente une forme générale ondulée.

Cette ondulation permet d'appliquer du produit et de peigner les cils différemment en fonction de leur position par rapport à l'applicateur. Cela participe encore à un résultat de maquillage irrégulier et ébouriffé. On peut prévoir que l'applicateur présente une ondulation simple avec une portion concave et une portion convexe. On peut également prévoir une ondulation plus complexe avec par exemple deux portions concaves et deux portions convexes.

De manière préférée, l'applicateur est d'une seule pièce.

La réalisation en une seule pièce présente l'avantage d'être plus rapide à produire, voire plus économique. L'applicateur peut être composé d'un matériau unique ou de plusieurs matériaux différents.

On peut prévoir que l'applicateur est dépourvu d'âme.

Un tel applicateur est de préférence réalisé par synthèse additive.

On prévoit en outre selon l'invention un article de cosmétique comprenant un applicateur tel que décrit précédemment.

De préférence, l'article comprend un essoreur, au moins un des doigts secondaires présentant une épaisseur et une rigidité telles que lors d'un passage de l'applicateur à travers l'essoreur, ce dernier ne provoque pas la déformation du doigt.

Ainsi, le chargement en produit est optimal en sortie de réservoir au niveau de ces doigts secondaires. En effet, puisque ces doigts ne sont pas ou peu déformés lors de leur passage à travers l'essoreur, ils sont encore chargés d'une quantité importante de produit après ce passage. On peut prévoir que les doigts principaux présentent une base et une extrémité libre, au moins certains des doigts secondaires contigus à la base du doigt principal auquel ils sont associés présentent les propriétés d'épaisseur et de rigidité mentionnées ci-dessus. Ainsi, lors du passage de l'applicateur à travers l'essoreur, le produit présent au niveau de ces doigts secondaires, c'est-à-dire présent dans une portion centrale de l'applicateur, n'est pas essoré. Ce produit non essoré constitue ainsi une réserve pour l'application.

De préférence, l'article comprend un essoreur, au moins un des doigts secondaires présentant une épaisseur et une rigidité telles que lors d'un passage de l'applicateur à travers l'essoreur, ce dernier provoque la déformation du doigt.

Ainsi, ces doigts secondaires sont moins chargés en produit et jouent plus un rôle dans le peignage et la séparation des cils. En effet, lors du passage de l'applicateur à travers l'essoreur, ces doigts sont fortement déformés et essorés d'une plus grande partie du produit qu'ils portaient. On peut prévoir que les doigts principaux présentent une base et une extrémité libre, au moins certains des doigts secondaires contigus à l'extrémité libre du doigt principal auquel ils sont associés présentent les propriétés d'épaisseur et de rigidité mentionnées ci-dessus. Cela est particulièrement utile puisque ces doigts au contact des cils pourront plus facilement les peigner et les séparer.

On prévoit en outre selon l'invention un procédé de fabrication par synthèse additive d'un applicateur tel que décrit précédemment, comprenant les étapes :
- d'obtention des données relatives à l'applicateur ; et
- de synthèse additive de l'applicateur au moyen des données.

L'avantage de ce mode de fabrication est notamment qu'il permet la réalisation d'applicateurs possédant une structure complexe, qui serait difficile voire impossible à réaliser par injection, compte tenu notamment de l'existence de certaines parties en contre-dépouille.

Différents procédés de synthèse additive connus de l'homme du métier peuvent être utilisés pour fabriquer l'invention. On peut par exemple citer le frittage sélectif par laser (ou SLS pour Sélective Laser Sintering) et la stéréolithographie (SLA). Un exemple de procédé de fabrication d'un applicateur de produit cosmétique par synthèse additive est décrit dans la demande WO 2008/113939 au nom de la demanderesse.

On prévoit également selon l'invention un fichier informatique comprenant des données aptes à être utilisées par un programme d'ordinateur pour commander la mise en oeuvre du procédé tel que décrit précédemment.

On prévoit aussi selon l'invention un support d'enregistrement électronique comprenant sous forme enregistrée des données permettant de mettre en oeuvre le procédé tel que décrit précédemment.

Enfin, on prévoit également selon l'invention un procédé de mise à disposition d'un fichier tel que décrit précédemment sur un réseau de télécommunication en vue de son téléchargement.

Nous allons maintenant présenter un mode de réalisation de l'invention à titre d'exemple non limitatif en référence aux dessins sur lesquels :
- la figure 1 est une vue en coupe longitudinale schématique d'un article de cosmétique selon un mode de réalisation de l'invention ;
- la figure 2A est une vue de face de l'applicateur de l'article de la figure 1 ;
- les figures 2B et 2C sont des vues en perspective de l'applicateur de la figure 2 ;
- les figures 3 et 4 sont des vues partielles agrandies de face respectivement de l'extrémité libre et de la base de l'applicateur des figures 2A à 2C ; et
- les figures 5 et 6 sont des vues respectivement de côté et d'extrémité de l'applicateur des figures 2A à 2C.

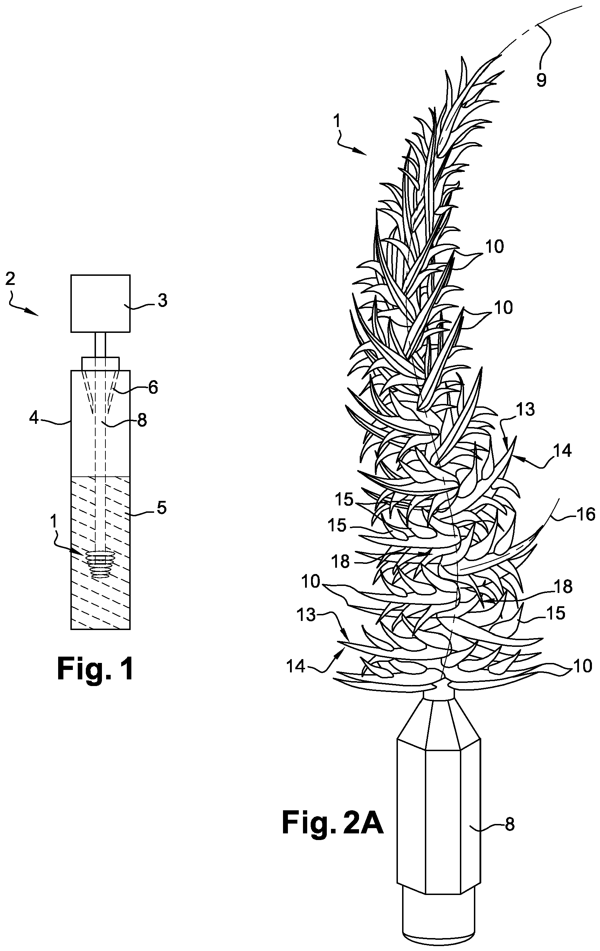

Nous allons maintenant présenter un mode de réalisation de l'applicateur et du procédé selon l'invention en référence aux figures 1 à 6. Nous allons décrire ici un applicateur de mascara mais on peut bien entendu prévoir l'utilisation de l'applicateur selon l'invention avec un autre produit cosmétique, par exemple du verni à ongles, du rouge à lèvres ou du gloss.

L'applicateur 1 de mascara décrit dans ce mode de réalisation fait partie d'un article de cosmétique 2 comprenant un capuchon ou un bouchon 3, auquel est rigidement lié l'applicateur 1, et un étui 4 comprenant un réservoir de mascara 5 et un essoreur 6 (voir figure 1) logé dans le col du réservoir sur lequel le capuchon peut être fixé, par exemple vissé, de façon amovible pour fermer le réservoir de l'article. L'applicateur s'étend alors dans le réservoir et baigne dans le mascara.

Bien entendu, d'autres types d'articles avec des applicateurs de mascara peuvent être envisagés comme par exemple des articles de type « stylo » dans lesquels l'applicateur n'est pas lié à un capuchon ou encore des articles dans lesquels l'applicateur ne baigne pas dans la réserve de mascara lorsqu'il n'est pas utilisé.

L'applicateur est porté par une tige rectiligne 8 qui le relie au capuchon 3. L'applicateur a une forme générale aplatie allongée et ondulée suivant son axe longitudinal 9. La tige 8 présente une forme générale rectiligne cylindrique. La tige et l'applicateur sont reliés par une de leurs extrémités.

L'applicateur peut présenter d'autres formes générales, par exemple une forme générale circulaire non aplatie, voire sphérique, parallélépipédique, cubique ou encore en forme de goutte d'eau.

### L'applicateur

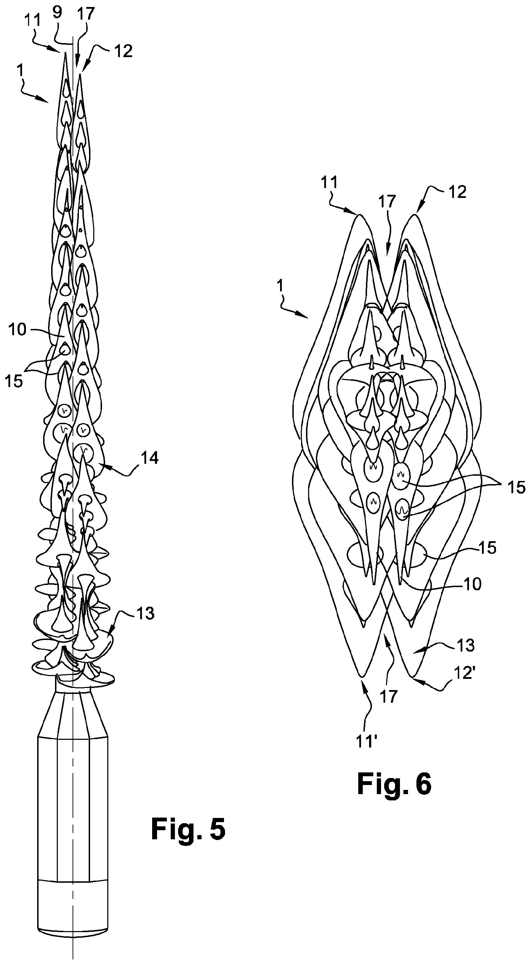

L'applicateur 1 comprend en l'espèce quatre rangées de doigts principaux 10, chacun des doigts étant directement porté à sa base par la fibre moyenne de l'applicateur. Chaque rangée s'étend depuis la base ou extrémité proximale de l'applicateur vers son extrémité libre. Deux de ces rangées 11, 11' sont situées dans une même couche et deux autres rangées 12, 12' sont situées dans une autre même couche (voir figures 5 et 6). Les deux couches sont distinctes, parallèles entre elles et non coplanaires. Ces deux couches sont adjacentes et l'espace 17 qui les sépare est apte à accueillir des réserves de mascara. Les rangées 11, 12 sont contigües et en regard l'une de l'autre. Il en est de même pour les rangées 11' et 12'. On peut envisager que l'applicateur comprenne un nombre plus important ou réduit de rangées de doigts, par exemple deux, trois, cinq, six, sept ou huit rangées de doigts. Par exemple, dans le cas où il y aurait six rangées de doigts, on peut envisager la présence de trois couches comprenant chacune deux rangées de doigts, ces trois couches étant distinctes, parallèles entre elles et non coplanaires.

Dans le cas présent, chaque rangée 11, 11', 12, 12' comprend entre neuf et onze doigts principaux 10. On peut envisager un nombre de doigts principaux 10 compris entre trois et quarante, voire entre dix et trente, par exemple entre quinze et vingt-cinq.

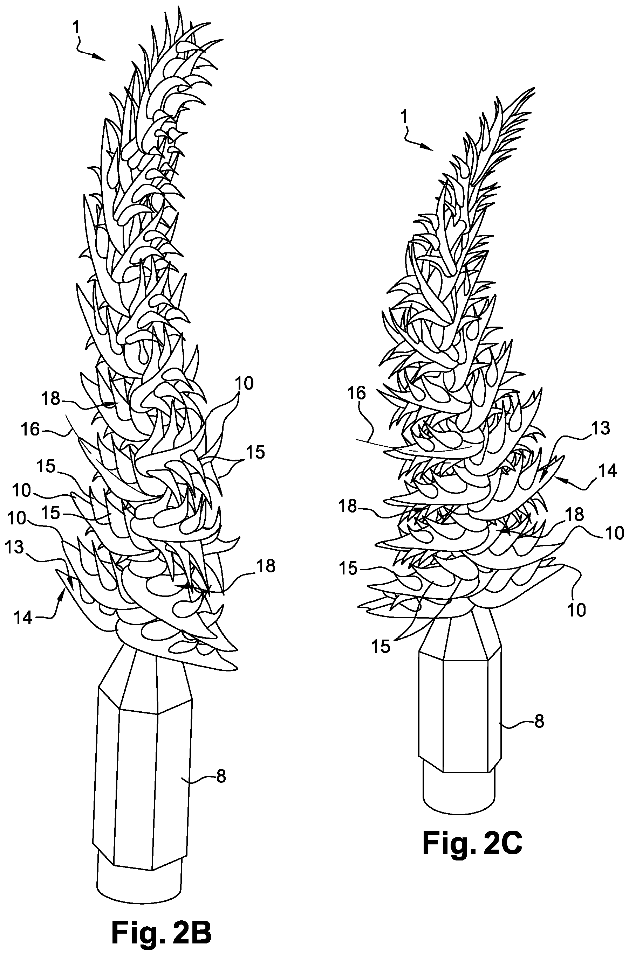

Dans une même couche, les doigts des deux rangées se succèdent alternativement les uns après les autres sur toute la longueur de l'applicateur. On peut bien entendu prévoir que ce ne soit pas le cas et que, par exemple, les doigts principaux 10 des deux rangées 11, 12, se succèdent deux à deux, c'est-à-dire qu'en parcourant la couche depuis l'extrémité proximale de l'applicateur vers son extrémité libre, on trouve successivement deux doigts principaux 10 d'une première rangée 11, 12 puis deux doigts principaux d'une seconde rangée 11, 12 (voir figure 2A à 2C). On peut également prévoir qu'il n'y ait pas d'organisation particulière pour la succession des doigts des deux rangées.

La disposition décrite ci-dessus implique la formation d'un espace 18 (voir figures 2A à 2C) entre deux doigts successifs d'une même rangée, cet espace étant apte à contenir du mascara et donc à servir de réserve de mascara.

Les doigts principaux 10 ont une forme générale lancéolée à section aplatie dans un plan perpendiculaire à une direction générale du doigt ou suivant une direction radiale à l'axe. On peut envisager qu'au moins un des doigts principaux 10 ait une forme générale aplatie. Leur forme lancéolée implique qu'ils présentent une portion basale large et une extrémité fine libre. On peut envisager que les doigts principaux 10 présentent d'autres formes utiles à un effet de maquillage particulier. Dans le cas présent, tous les doigts principaux 10 ont la même forme générale. On peut envisager un applicateur 1 dont certains doigts principaux 10 ont la forme décrite ci-dessus, et d'autres doigts principaux ont d'autres formes.

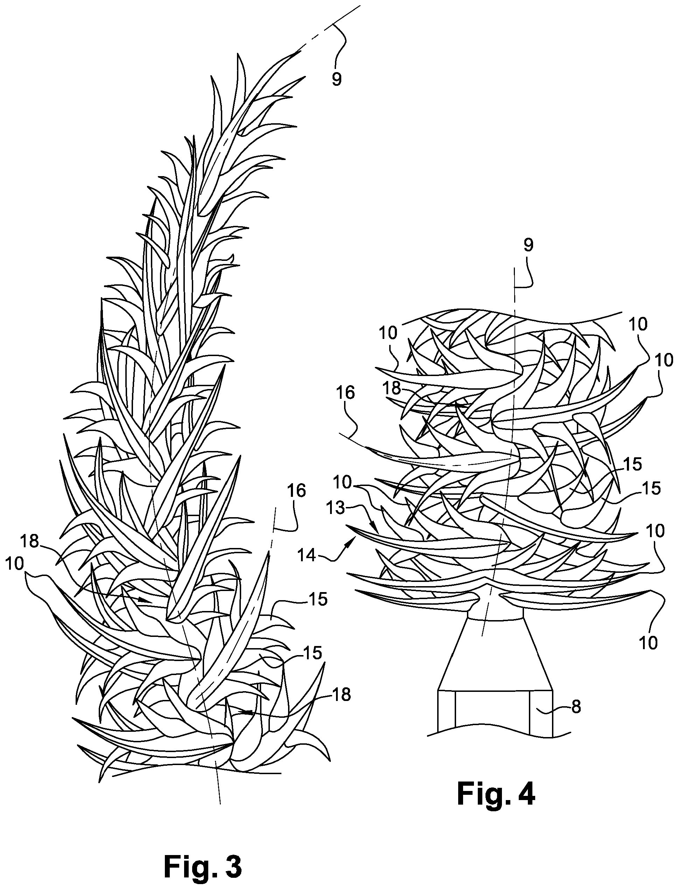

Les doigts principaux 10 présentent chacun deux faces (voir figure 4), une face supérieure 13 qui est ici en regard de l'extrémité libre de l'applicateur, et une face inférieure 14 qui est ici en regard de l'extrémité proximale de l'applicateur. Chacune de ces faces présentent des stries à leur surface qui permettent d'emporter plus facilement le mascara lorsque l'applicateur sort du réservoir. La plupart des doigts principaux a une forme non plane, et ici courbe. Cette courbure des doigts principaux est légèrement concave avec un centre de courbure situé en regard de la face supérieure 13 du doigt 10. On peut prévoir que le centre de courbure soit situé en regard de la face inférieure 14 du doigt 10. Cette courbure permet de peigner le cil dans une direction spécifique souhaitée sans que l'utilisatrice n'ait besoin de faire un geste de maquillage particulier.

La largeur et la longueur des doigts principaux 10 diminuent lorsqu'on parcourt l'applicateur 1 depuis son extrémité proximale vers son extrémité libre. Inversement, on peut prévoir que la largeur et/ou la longueur des doigts principaux 10 diminue lorsqu'on parcourt l'applicateur 1 dans le sens inverse. On peut bien entendu prévoir que la largeur des doigts principaux 10 reste la même lorsqu'on parcourt l'applicateur 1 depuis son extrémité proximale vers son extrémité libre. Les diminutions et augmentations de dimensions des doigts peuvent se faire de manière progressive le long de l'applicateur ou alors par intervalles ou « en escalier ».

Les doigts principaux 10 ont chacun une direction générale qui forme un angle avec une direction longitudinale 9 de l'applicateur 1. Cet angle diminue lorsqu'on parcourt l'applicateur depuis l'extrémité proximale vers l'extrémité libre. Dans le cas présent, l'angle entre la direction longitudinale 9 de l'applicateur et le doigt le plus distal, c'est-à-dire près de l'extrémité libre de l'applicateur, est proche de 0°. L'angle entre la direction longitudinale de l'applicateur et le doigt le plus proximal, c'est-à-dire près de la base, est lui sensiblement égal à 90°. Entre ce doigt principal 10 le plus proximal et le doigt principal le plus distal, l'angle entre les doigts principaux 10 successifs et la direction longitudinale 9 diminue progressivement. Alternativement, on peut prévoir que cet angle augmente progressivement.

On peut envisager qu'il n'y ait pas d'évolution progressive de l'angle entre les différents doigts principaux et la direction longitudinale 9. Par exemple, en parcourant l'applicateur depuis son extrémité proximale vers son extrémité libre, un doigt principal 10 peut former avec la direction longitudinale 9 un angle plus faible par rapport au doigt principal qui le précède et également plus faible par rapport au doigt principal qui lui fait suite. On peut aussi envisager qu'un doigt forme un angle plus fort avec la direction longitudinale 9 que les doigts principaux qui le précèdent et lui font suite directement. On obtient dans ces deux cas un applicateur avec une allure très irrégulière qui peut être recherchée.

On peut envisager que l'angle entre un doigt principal quelconque de l'applicateur et la direction longitudinale de l'applicateur est compris entre 0° et 90°, de préférence compris entre 0° et 75°, par exemple compris entre 0° et 60°, voire compris entre 0° et 45°.

Des doigts secondaires 15 s'étendent en l'espèce à partir d'au moins une des faces de chacun des doigts principaux 10. Pour certains doigts principaux 10, des doigts secondaires 15 s'étendent à partir de leurs faces supérieure 13 et inférieure 14. Pour d'autres, des doigts secondaires s'étendent seulement à partir d'une des deux faces. Pour certains doigts principaux 10, il y a autant de doigts secondaires 15 qui s'étendent à partir de chaque face. Dans le cas présent, une plus grande partie des doigts principaux 10 présentent trois doigts secondaires sur chacune de leurs faces 13, 14.

Les doigts secondaires 15 ont la même forme que les doigts principaux. On peut bien entendu envisager qu'au moins certains des doigts secondaires aient des formes différentes.

Les doigts secondaires 15 forment un angle, par rapport à une direction longitudinale 16 du doigt principal à partir duquel ils s'étendent, qui est compris entre 0° et 90°. De préférence, cet angle est compris entre 0° et 60°, voire entre 0° et 45°. Dans le cas présent, les doigts secondaires 15 qui s'étendent à partir d'un même doigt principal forment tous sensiblement le même angle avec la direction longitudinale 16 du doigt principal. On peut bien entendu envisager que ces angles soient différents pour les différents doigts secondaires 15.

Les doigts secondaires 15 présentent eux aussi des faces supérieure et inférieure ainsi que des stries à leur surface.

Les doigts secondaires 15 présents sur un même doigt principal 10 varient. Ainsi, les dimensions des doigts secondaires 15 diminuent lorsqu'on parcourt le doigt principal 10 depuis sa base vers son extrémité libre. C'est la longueur ainsi que la largeur des doigts secondaires qui diminuent. On peut envisager que les différents doigts secondaires 15 présents sur un même doigt principal soient tous identiques entre eux. On peut également envisager qu'il n'y ait pas une diminution mais une augmentation des dimensions des doigts secondaires.

De manière générale, les dimensions des doigts secondaires diminuent lorsqu'on parcourt l'applicateur depuis son extrémité proximale vers son extrémité libre.

Les doigts secondaires 15 s'étendent dans la même couche que celle dans laquelle s'étend le doigt principal 10 auquel ils sont associés.

Dans le présent exemple, on observe que chaque doigt principal 10, avec ses doigts secondaires 15, a une allure générale qui rappelle celle de l'applicateur tout entier à plus petite échelle. Il est en de même pour chaque doigt secondaire par rapport au doigt principal qui le porte. L'applicateur a ainsi une structure qui fait penser à celle d'une fractale. On rappelle que ce type de structure se caractérise par une homothétie interne et concerne des objets dont la structure est invariante par changement d'échelle.

Les doigts secondaires 15 d'un doigt principal 10 qui sont contigus à la base de ce doigt principal 10 présentent une épaisseur et une rigidité telles que lors d'un passage de l'applicateur 1 à travers l'essoreur 6, ce dernier ne provoque pas leur déformation.

En outre, les doigts secondaires 15 d'un doigt principal 10 qui sont contigus à l'extrémité libre du doigt principal 10 présentent une épaisseur et une rigidité telles que lors d'un passage de l'applicateur 1 à travers l'essoreur 6, ce dernier provoque leur déformation.

Ces deux caractéristiques relatives à la rigidité et l'épaisseur des doigts secondaires peuvent être prises seules ou en combinaison.

### Utilisation de l'applicateur

Dans un premier temps, l'utilisatrice manipule l'applicateur 1 en tenant le capuchon 3 entre ses doigts et plonge l'applicateur 1 dans le réservoir de mascara 5 de l'article 2. Lors de cette étape, les doigts principaux 10 et secondaires 15, ainsi que les espaces 17 et 18 se chargent en mascara.

Lors de la sortie de l'applicateur 1 hors du réservoir et donc de son passage à travers l'essoreur 6, ce dernier est essoré mais tout ou partie de la réserve de mascara présente dans les espaces 17, 18, ainsi que celle présente au niveau des doigts secondaires 15 contigus à la base du doigt principal 10 auquel ils sont liés, est conservée. Cela est notamment dû aux caractéristiques de rigidité de ces doigts secondaires 15.

Lors de l'utilisation, l'utilisatrice approche l'applicateur de ses cils afin de les maquiller et utilise pour cela un mouvement de maquillage classique, essentiellement vertical. Le mascara présent sur les doigts principaux 10 et secondaires 15 est ainsi déposé sur les cils. Dans le même mouvement, ces doigts permettent de lisser le mascara déposé ainsi que de peigner les cils. Comme il existe pour chaque doigt, qu'il soit principal ou secondaire, des caractéristiques de dimensions et/ou direction différentes, on obtient un peignage des cils dans des directions différentes qui favorise l'effet ébouriffé recherché.

Lors de l'application, la réserve de mascara présente dans les espaces 17, 18 se répand progressivement sur les faces supérieure et inférieure des doigts principaux et secondaires afin de limiter le nombre de fois que l'utilisatrice est obligée de plonger l'applicateur dans le réservoir 5 de mascara de l'article 2.

En outre, du fait de la souplesse de l'applicateur, celui-ci est localement comprimé au niveau des zones de contact avec les cils, c'est-à-dire dans les zones d'application du mascara, ce qui entraine une sortie du mascara présent dans les espaces 17, 18 et situé dans ces zones. Cela facilite le maquillage en réduisant le nombre de fois où l'utilisatrice doit replonger l'applicateur dans le réservoir.

Plus précisément, lorsque l'applicateur est localement comprimé, le mascara présent dans les espaces 17, 18 situés à ce niveau sort de ces espaces et se répand sur les doigts principaux 10 et secondaires 15 et est donc disponible pour le maquillage.

En outre, l'utilisatrice peut choisir d'utiliser cet applicateur 1 en tant qu'applicateur d'eyeliner. Pour cela, elle utilise l'extrémité libre fine de l'applicateur afin de déposer avec précision du mascara sur sa peau, par exemple la peau de sa paupière supérieure. De manière non limitative, l'utilisatrice peut donner une inclinaison à l'extrémité libre de l'applicateur par rapport à la paupière lui permettant de choisir l'épaisseur du trait qu'elle souhaite appliquer, par exemple un trait plus épais afin d'augmenter l'effet de maquillage ou un trait plus fin afin d'obtenir un maquillage plus discret. Le mascara qui est présent dans les espaces 17, 18 peut s'écouler jusqu'à l'extrémité libre de l'applicateur et donc servir de réserve à celle-ci.

### Le procédé de fabrication

L'applicateur présenté ci-dessus est ici fabriqué d'une seule pièce. Plus particulièrement, cet applicateur est ici fabriqué par synthèse additive, aussi appelé impression tridimensionnelle.

Toute matière appropriée convient pour réaliser l'applicateur. Cela peut être une matière plastique par exemple un polyamide, notamment un polyamide 1102, un PEBA 2301, ou bien une résine de type ABS, ou encore un métal en poudre tel qu'un acier inoxydable ou du titane.

La matière peut être rigide mais sera de préférence élastiquement flexible. Il est préférable que la matière, en association avec les caractéristiques de forme de l'applicateur, lui donne une certaine souplesse.

On rappelle qu'un applicateur de mascara a généralement une longueur inférieure à 20 mm.

Plusieurs procédés de synthèse additive peuvent être utilisés pour la réalisation d'un applicateur tel que décrit précédemment. On peut citer notamment le frittage sélectif par laser à partir de matière en poudre et la stéréolithographie (SLA). Dans le cas présent, un procédé de frittage sélectif par laser est utilisé, ce procédé présentant l'avantage de permettre la fabrication d'objets ayant une forme complexe.

L'applicateur est dans un premier temps conçu sur un logiciel de conception assisté par ordinateur (CAO). Un fichier au format STL comprenant les données de conception de l'applicateur ainsi conçu est ensuite exporté. Ces données déterminent la forme de l'applicateur. D'autres formats de fichier standards pour la synthèse additive peuvent être utilisés.

Ce fichier est ensuite traité par un logiciel fourni par le constructeur de la machine utilisée pour réaliser la synthèse additive. Ce logiciel découpe en sections le fichier sous la forme d'une centaine d'images numériques au format SLI ou BFF, chacune d'elles correspondant à une couche du modèle à imprimer, c'est-à-dire à une section de l'applicateur prise dans un plan perpendiculaire à la direction 9. Ces données sont ensuite transmises à l'imprimante afin qu'elle produise l'applicateur.

Une fois la synthèse terminée, des traitements peuvent être appliqués à l'applicateur afin par exemple d'en améliorer l'aspect.

Bien entendu on pourra apporter à l'invention de nombreuses modifications sans sortir du cadre de celle-ci tel que défini par les revendications.

Le mode de réalisation présenté ci-dessus concerne les applicateurs de mascara et les eyeliner mais on peut appliquer ces caractéristiques à d'autres types d'applicateurs de produit cosmétique tels que des applicateurs de vernis à ongles, de rouge à lèvres, ou de produit cosmétique pour les sourcils ou les cheveux.

## Revendications

1. Applicateur (1) de produit cosmétique présentant une extrémité proximale et une extrémité libre et comprenant au moins deux rangées (11, 12) de doigts (10) formant respectivement des première et deuxième couches planes,
les deux couches étant distinctes et parallèles entre elles,
les doigts présentant une dimension qui diminue lorsqu'on parcourt l'applicateur depuis l'extrémité proximale jusqu'à l'extrémité libre,
les deux rangées (11, 12) étant en regard l'une de l'autre, de préférence ces deux rangées étant contiguës, les doigts étant des doigts principaux,
un angle entre une direction longitudinale (9) de l'applicateur et chaque doigt principal (10) diminuant lorsqu'on parcourt l'applicateur depuis l'extrémité proximale jusqu'à l'extrémité libre,
les doigts principaux (10) respectifs de deux des rangées (11, 11', 12, 12') en regard l'une de l'autre sont décalés les uns par rapport aux autres le long d'une direction longitudinale (9) de l'applicateur,
la valeur du décalage entre deux doigts consécutifs étant variable le long de l'applicateur,
l'applicateur comprend en outre des doigts secondaires (15) s'étendant à partir d'au moins un des doigts principaux, de préférence des doigts secondaires s'étendant à partir de chaque doigt principal, au moins un des doigts (10, 15) ayant une forme lancéolée.

2. Applicateur (1) selon la revendication 1, comprenant en outre une troisième rangée de doigts principaux (11 ') s'étendant dans la première couche.

3. Applicateur (1) selon la revendication précédente, comprenant en outre une quatrième rangée de doigts principaux (12') s'étendant dans la deuxième couche, de préférence la quatrième rangée étant en regard de la troisième (11 ').

4. Applicateur (1) selon l'une quelconque des revendications précédentes, dans lequel au moins certains des doigts principaux (10) de deux des rangées (11, 11', 12, 12') s'étendant dans une même couche ont des directions respectives opposées.

5. Applicateur (1) selon l'une quelconque des revendications précédentes, dans lequel les doigts principaux (10) respectifs de deux des rangées (11, 11', 12, 12') en regard l'une de l'autre sont disposés en quinconce.

6. Applicateur (1) selon l'une quelconque des revendications précédentes, dans lequel, dans au moins l'une des rangées, les doigts principaux (10) de la rangée (11, 11', 12, 12') diffèrent tous entre eux au moins par une direction, une dimension et/ou une forme.

7. Applicateur (1) selon l'une quelconque des revendications précédentes, dans lequel au moins un des doigts principaux (10) présente une face supérieure (13) et une face inférieure (14), et au moins un des doigts secondaires (15) associés à ce doigt principal s'étend à partir de l'une et/ou l'autre de ces faces.

8. Applicateur (1) selon l'une quelconque des revendications précédentes, dans lequel au moins un des doigts secondaires (15) s'étend dans la même couche que le doigt principal (10) à partir duquel il s'étend, de préférence tous les doigts secondaires d'un doigt principal s'étendant dans la même couche que le doigt principal.

9. Applicateur (1) selon l'une quelconque des revendications précédentes, dans lequel au moins un des doigts principaux (10) et/ou au moins un des doigts secondaires (15) présente une section aplatie suivant une direction parallèle à une direction longitudinale (9) de l'applicateur.

10. Applicateur (1) selon l'une quelconque des revendications précédentes, dans lequel au moins un des doigts principaux (10) et/ou au moins un des doigts secondaires (15) a une forme générale aplatie, de préférence tous les doigts principaux et/ou tous les doigts secondaires ayant une forme générale aplatie.

11. Applicateur (1) selon l'une quelconque des revendications précédentes, dans lequel au moins un des doigts (10, 15) présente des stries à sa surface, de préférence tous les doigts présentant des stries à leur surface.

12. Applicateur (1) selon l'une quelconque des revendications précédentes, qui présente une forme générale ondulée.

13. Applicateur (1) selon l'une quelconque des revendications précédentes, dans lequel l'applicateur est d'une seule pièce.

14. Article (2) de cosmétique comprenant un applicateur selon l'une quelconque des revendications précédentes.

15. Article (2) selon la revendication précédente, dans lequel l'article (1) comprend un essoreur (6), au moins un des doigts secondaires (15) présentant une épaisseur et une rigidité telles que lors d'un passage de l'applicateur à travers l'essoreur, ce dernier ne provoque pas la déformation du doigt.

16. Procédé de fabrication par synthèse additive d'un applicateur (1) selon l'une quelconque des revendications 1 à 13, comprenant les étapes:
- d'obtention de données relatives à l'applicateur; et
- de synthèse additive de l'applicateur au moyen des données.

17. Fichier informatique comprenant des données aptes à être utilisées par un programme d'ordinateur pour commander la mise en oeuvre du procédé selon la revendication précédente utilisant une machine pour réaliser la synthèse additive.

18. Support d'enregistrement électronique comprenant sous forme enregistrée des données permettant de mettre en oeuvre le procédé selon la revendication 16 utilisant une machine pour réaliser la synthèse additive.

19. Procédé de mise à disposition d'un fichier selon la revendication 17 sur un réseau de télécommunication en vue de son téléchargement.

## Patentansprüche

1. Applikator (1) für ein Kosmetikprodukt, der ein proximales Ende und ein freies Ende aufweist, und mindestens zwei Reihen (11, 12) von Fingern (10) umfasst, die jeweils erste und zweite ebene Schichten bilden,
wobei die zwei Schichten getrennt und parallel zueinander sind,
wobei die Finger Ausmaße aufweisen, die abnehmen, wenn der Applikator vom proximalen Ende zum freien Ende abgetastet wird,
wobei die zwei Reihen (11, 12) einander gegenüberliegen, wobei diese zwei Reihen vorzugsweise aneinandergrenzend sind,
wobei die Finger Primärfinger sind,
wobei ein Winkel zwischen einer Längsrichtung (9) des Applikators und jedem Primärfinger (10) abnimmt, wenn der Applikator vom proximalen Ende bis zum freien Ende abgetastet wird,
wobei die jeweiligen Primärfinger (10) von zwei der sich gegenüberliegenden Reihen (11, 11', 12, 12') entlang einer Längsrichtung (9) des Applikators zueinander verschoben sind,
wobei der Wert der Verschiebung zwischen zwei aufeinanderfolgenden Fingern entlang des Applikators variabel ist,
wobei der Applikator ferner Sekundärfinger (15) umfasst, die sich von mindestens einem der Primärfinger erstrecken, wobei vorzugsweise Sekundärefingern sich von jedem Primärfinger erstrecken, wobei mindestens einer der Finger (10, 15) eine lanzettliche Form hat.

2. Applikator (1) nach Anspruch 1, ferner eine dritte Reihe von Primärfingern (11') umfassend, die sich in der ersten Schicht erstrecken.

3. Applikator (1) nach dem vorhergehenden Anspruch, ferner eine vierte Reihe von Primärfingern (12') umfassend, die sich in der zweiten Schicht erstrecken, wobei vorzugsweise die vierte Reihe gegenüber der dritten (11') liegt.

4. Applikator (1) nach einem der vorhergehenden Ansprüche, wobei mindestens einige der Primärfinger (10) von zwei der Reihen (11, 11', 12, 12'), die sich in einer gleichen Schicht erstrecken, jeweils entgegengesetzte Richtungen haben.

5. Applikator (1) nach einem der vorhergehenden Ansprüche, wobei die jeweiligen Primärfinger (10) von zwei der sich gegenüberliegenden Reihen (11, 11', 12, 12') zueinander versetzt angeordnet sind.

6. Applikator (1) nach einem der vorhergehenden Ansprüche, wobei, in mindestens einer der Reihen, sich die Primärfinger (10) der Reihe (11, 11', 12, 12') alle voneinander unterscheiden mindestens in Richtung, Ausmaß und/oder Form.

7. Applikator (1) nach einem der vorhergehenden Ansprüche, wobei mindestens einer der Primärfinger (10) eine Oberseite (13) und eine Unterseite (14) aufweist, und mindestens einer der Sekundärfinger (15), der diesem Primärfinger zugeordnet ist, sich von der einen und/oder der anderen dieser Seiten erstreckt.

8. Applikator (1) nach einem der vorhergehenden Ansprüche, wobei sich mindestens einer der Sekundärfinger (15) in derselben Schicht wie der Primärfinger (10) erstreckt, von dem aus er sich erstreckt, wobei sich vorzugsweise alle Sekundärfinger eines Primärfingers in derselben Schicht wie der Primärfinger erstrecken.

9. Applikator (1) nach einem der vorhergehenden Ansprüche, wobei mindestens einer der Primärfinger (10) und/oder mindestens einer der Sekundärfinger (15) einen abgeflachten Abschnitt aufweist, der einer Richtung parallel zu einer Längsrichtung (9) des Applikators folgt.

10. Applikator (1) nach einem der vorhergehenden Ansprüche, wobei mindestens einer der Primärfinger (10) und/oder mindestens einer der Sekundärfinger (15) eine abgeflachte allgemeine Form hat, wobei vorzugsweise alle Primärfinger und/oder alle Sekundärfinger eine abgeflachte allgemeine Form haben.

11. Applikator (1) nach einem der vorhergehenden Ansprüche, wobei mindestens einer der Finger (10, 15) Rillen auf seiner Oberfläche aufweist, wobei vorzugsweise alle Finger Rillen auf ihrer Oberfläche aufweisen.

12. Applikator (1) nach einem der vorhergehenden Ansprüche, der eine wellenförmige allgemeinen Form aufweist.

13. Applikator (1) nach einem der vorhergehenden Ansprüche, wobei der Applikator aus einem Stück besteht.

14. Kosmetikartikel (2), der einen Applikator nach einem der vorhergehenden Ansprüche umfasst.

15. Artikel (2) nach dem vorhergehenden Anspruch, wobei der Artikel (1) einen Abstreifer (6) umfasst, wobei mindestens einer der Sekundärfinger (15) eine solche Dicke und Steifigkeit aufweist, dass bei einem Durchgang des Applikators durch den Abstreifer, dieser keine Verformung des Fingers verursacht.

16. Verfahren zur Herstellung eines Applikators (1) durch additive Synthese nach einem der Ansprüche 1 bis 13, die Schritte umfassend:
- der Beschaffung von Daten bezüglich des Applikators; und
- der additiven Synthese des Applikators mittels der Daten.

17. Computerdatei, die Daten umfasst, die für die Verwendung durch ein Computerprogramm geeignet sind, um die Durchführung des Verfahrens nach dem vorhergehenden Anspruch unter Verwendung einer Maschine zur Realisierung der additiven Synthese zu steuern.

18. Elektronisches Aufzeichnungsmedium, das in aufgezeichneter Form Daten umfasst, um die Durchführung des Verfahrens nach Anspruch 16 unter Verwendung einer Maschine zur Realisierung der additiven Synthese zu ermöglichen.

19. Verfahren zum Bereitstellen einer Datei nach Anspruch 17 in einem Telekommunikationsnetz zum Herunterladen.

## Claims

1. A cosmetic product applicator (1) having a proximal end and a free end and comprising at least two rows (11, 12) of fingers (10) forming first and second planar layers respectively,
both layers being distinct from and parallel to each other,
the fingers having a dimension which decreases from the proximal end to the free end of the applicator,
both rows (11, 12) facing each other, preferably these two rows being contiguous, the fingers being main fingers,
an angle between a longitudinal direction (9) of the applicator and each main finger (10) decreasing from the proximal end to the free end of the applicator,
the respective main fingers (10) of two of the rows (11, 11', 12, 12') facing each other are offset from each other along a longitudinal direction (9) of the applicator,
the offset value between two consecutive fingers being variable along the applicator,
the applicator further comprises secondary fingers (15) extending from at least one of the main fingers, preferably secondary fingers extending from each main finger, at least one of the fingers (10, 15) being lanceolate-shaped.

2. The applicator (1) according to claim 1, further comprising a third row of main fingers (11') extending in the first layer.

3. The applicator (1) according to the preceding claim, further comprising a fourth row of main fingers (12') extending in the second layer, preferably the fourth row facing the third row (11').

4. The applicator (1) according to any of the preceding claims, wherein at least some of the main fingers (10) of two of the rows (11, 11', 12, 12') extending in a same layer have respective opposite directions.

5. The applicator (1) according to any of the preceding claims, wherein the respective main fingers (10) of two of the rows (11, 11', 12, 12') facing each other are staggeredly disposed.

6. The applicator (1) according to any of the preceding claims, wherein in at least one of the rows, the main fingers (10) of the row (11, 11', 12, 12') all differ from each other in at least one of direction, dimension and/or shape.

7. The applicator (1) according to any of the preceding claims, wherein at least one of the main fingers (10) has an upper face (13) and a lower face (14), and at least one of the secondary fingers (15) associated with this main finger extends from either or both of these faces.

8. The applicator (1) according to any of the preceding claims, wherein at least one of the secondary fingers (15) extends in the same layer as the main finger (10) from which it extends, preferably all the secondary fingers of a main finger extend in the same layer as the main finger.

9. The applicator (1) according to any of the preceding claims, wherein at least one of the main fingers (10) and/or at least one of the secondary fingers (15) have a flattened cross-section along a direction parallel to a longitudinal direction (9) of the applicator.

10. The applicator (1) according to any of the preceding claims, wherein at least one of the main fingers (10) and/or at least one of the secondary fingers (15) generally is flattened-shaped, preferably all the main fingers and/or all the secondary fingers generally are flattened-shaped.

11. The applicator (1) according to any of the preceding claims, wherein at least one of the fingers (10, 15) has ridges on its surface, preferably all the fingers having ridges on their surfaces.

12. The applicator (1) according to any of the preceding claims, which generally is wavy-shaped.

13. The applicator (1) according to any of the preceding claims, wherein the applicator is made in one piece.

14. A cosmetics item (2) comprising an applicator according to any of the preceding claims.

15. The item (2) according to the preceding claim, wherein the item (1) comprises a wiper (6), at least one of the secondary fingers (15) having a thickness and a rigidity such that when passing the applicator through the wiper, the latter does not cause the finger to be deformed.

16. A method for manufacturing by additive synthesis an applicator (1) according to any of claims 1 to 13, comprising the steps of:
- obtaining data relating to the applicator; and
- additively synthesising the applicator by means of the data.

17. A computing file comprising data capable of being used by a computer program to control the implementation of the method according to the preceding claim using a machine to perform the additive synthesis.

18. An electronic recording medium comprising, in recorded form, data for implementing the method according to claim 16 using a machine to perform the additive synthesis.

19. A method for providing a file according to claim 17 over a telecommunication network for downloading it.
